# EUROPEAN PATENT SPECIFICATION

(11) **EP 4 364 975 B1**
(45) Date of publication and mention of the grant of the patent: **25.02.2026**
(21) Application number: 23206875.9
(22) Date of filing: 31.10.2023
(51) Int. Cl.: B60C 11/16

(54) **TIRE STUD COMPRISING A BIODEGRADABLE POLYMER AND TIRE WITH SUCH A TIRE STUD**
GLEITSCHUTZSTIFT MIT EINEM BIOLOGISCH ABBAUBAREN POLYMER UND REIFEN MIT EINEM SOLCHEN GLEITSCHUTZSTIFT
CRAMPON DE PNEU COMPRENANT UN POLYMÈRE BIODÉGRADABLE ET PNEU AVEC UN TEL CRAMPON DE PNEU

(30) Priority: 01.11.2022 US 202218051554
(43) Date of publication of application: 08.05.2024
(73) Proprietor: The Goodyear Tire & Rubber Company, Akron, OH 44316 (US)
(72) Inventor: PONS, Frederic Michel-Jean, F-57100 Thionville (FR); WINDESHAUSEN, Michel Jean Yves, 6780 Messancy (BE); KAES, Christian Jean-Marie, L-9184 Schrondweiler (LU); MUNOZ MEJIA, Luisa Fernanda, L-9772 Troine (LU); MORA SOJO, Maria Carolina, L-1858 Luxembourg (LU)
(74) Representative: Kutsch, Bernd

(56) References cited:
- CA-A1- 3 078 529
- RU-C1- 2 111 130
- US-A- 3 757 841

## Description

### Field of the Invention

The present invention relates to a tire stud comprising a stud body comprising at least one biodegradable polymer, and to a tire comprising said tire stud. Such tire studs have a particular value on winter, snow and/or ice tires.

### Background of the Invention

Studs for winter tires have been known for decades and have helped to significantly improve traction characteristics on snow and particularly ice-covered surfaces to improve the grip of the tire to icy roads and other icy pavements. However, conventional tire studs also have some drawbacks which have limited their use in winter tires. For example, conventional tire studs typically have a body which is made of a metal material, such as aluminum, and have a pin extending from the body for ensuring non-skid behavior of the tire on icy roads. Aluminum has however the disadvantage of generally high cost and fluctuating prices. Moreover, the use of a metal body may affect the structure of the rubber composition in the tires due to high temperature. Furthermore, the use of such metal body may result in relatively high level of noise generation.

Recently studs based on polymeric material have been developed which may overcome some of these disadvantages associated with conventional studs. An example of a polymer stud is given in WO 2017/198352 A. More specifically, this reference discloses a stud for a pneumatic vehicle tire having a stud body made from a plastic, such as polyvinyl chloride (PVC) or polyethylene (PE), which contains reinforcing fibers, and a stud pin made from a hard metal which is positioned in the stud body and protrudes out of the stud body.

Another example of a polymer stud is given in EP 3 763 549 A1, wherein the stud body is made of a polymer-based material, in particular a mixture of syndiotactic 1,2-polybutadiene (SPBD) and another polymer, and wherein the pin is made of steel or carbon tungsten.

It is known in the art that studs in winter tires can be damaged during the use of the tires resulting for example in the creation of fine particles made of the material of the stud body, such as alumina, PVC, PE or SPBD, and/or can be ejected on the roads while driving which is detrimental to the ecosystem. Therefore, in order to avoid such issues and in view of the more and more stringent regulations in terms of environmental impact of the tire industry, there is a need to provide new studs in order to reduce the particles emissions and environment pollution when studs are ejected in nature. It was found that this is possible with the tire stud and the tire according to the present invention.

CA 3 078 529 A1, RU 2 111 130 C1 and US 3,757,841 each disclose a tire stud comprising a stud body and a pin.

### Summary of the Invention

The invention relates to a tire stud in accordance with claim 1 and to a tire in accordance with claim 12.

Dependent claims refer to preferred embodiments of the invention.

Therefore, the present invention relates to a tire stud comprising a stud body comprising at least one biodegradable polymer, wherein the at least one biodegradable polymer is one or more of a bio-based biodegradable polymer and a synthetic biodegradable polymer, and a pin.

The present invention further relates to a pneumatic or non-pneumatic tire comprising at least one tire stud according to the present invention.

### Definitions

In the context of the present invention, the term "biodegradable" relates to a compound/material susceptible to degradation by carbon dioxide, water and/or biomass. For the degradation, oxidation and/or hydrolysis occur followed by biological process for lowering of the molar masses of macromolecules that form the biodegradable compound/material. In general, the degradation of a polymer may occur at varying rates, with a half-life in the order of days, weeks, months, or years. As known in the art, the biodegradability of polymers can be determined by different methods. For example, the increase in biodegradability of polymers can be determined by determining the CO₂ evolution of the polymers. Known standard methods for determining the biodegradability are ASTM D6400 and ISO 17088. Hence, an example of a "biodegradable" material within the meaning of this application is a material having a biodegradability as determined by ASTM D6400 or ISO 17088.

Preferably, the half-life of a biodegradable stud body, as such, used in the present invention is of at most fifteen (15) years, preferably at most ten (10) years, more preferably at most five (5) years in nature, under aerobic environments (forests, lands, land disposal, etc.) and/or under anaerobic environments (lakes, rivers, seas, oceans, etc.).

In the context of the present invention, the expression "stud body, as such" means that the stud body, and even the tire stud, is not fixed/embedded in the tires. For example, this situation might occur when a tire stud has been ejected from a tire (tire tread) on a road.

In the context of the present invention, the term "bio-based" relative to a material, such as a polymer, means that at least a portion of the material, preferably the entire material, is produced from renewable raw materials, such as algae, bacteria, microorganisms, plants, etc. Typical renewable raw materials from plants are corn, sugarcane, potatoes, zein, soy, pea, gluten, etc. In the art, the terms "bio-based polymer" and "biopolymer" are used interchangeably. This is also the case in the context of the present invention. Bio-based materials can be characterized by ASTM D6866 and ISO 16620-2. Hence, an example of a "bio-based" material within the meaning of this application is a material being bio-based under ASTM D6866 or ISO 16620-2.

In the context of the present invention, the term "substantially free of X", when referring to an article, means that the article in question consists of at most 1 weight percent, more preferably at most 0.1 weight percent, more preferably at most 0.01 weight percent, more preferably from 0 to 0.001 weight percent, more preferably from 0 to 0.0001 weight percent, of X based on the weight of the article.

### Brief Description of the Drawings

The invention will be described by way of example and with reference to the accompanying drawing in which:

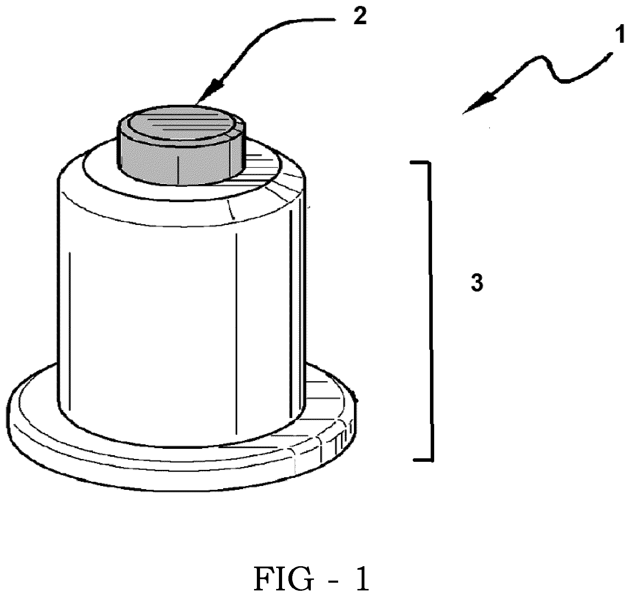

FIG. 1 is a schematic drawing of a typical tire stud, the tire stud 1 comprising a pin 2 and a stud body 3.

### Detailed Description of Preferred Embodiment of the Invention

The present invention relates to a tire stud comprising a stud body comprising at least one biodegradable polymer, wherein the at least one biodegradable polymer is one or more of a bio-based biodegradable polymer and a synthetic biodegradable polymer, and a pin.

Preferably, the bio-based biodegradable polymer is selected from the group consisting of polylactide (PLA), polyhydroxyalkanoate (PHA), polybutylene succinate (PBS), starch, starch-based polymer, cellulose, cellulose-based polymer, chitin, chitin-based polymer, chitosan, chitosan-based polymer, lignin, lignin-based polymer, soy-based polymer, succinic acid based-polyester polyols, and a mixture of two or more thereof.

Preferably, the bio-based biodegradable polymer is a bio-based biodegradable polyester, wherein the biodegradable polyester is selected from the group consisting of polylactide (PLA), polyhydroxyalkanoate (PHA), polybutylene succinate (PBS), starch, starch-based polymer, cellulose, cellulose-based polymer, chitin, chitin-based polymer, chitosan, chitosan-based polymer, lignin, lignin-based polymer, succinic acid based-polyester polyols and a mixture of two or more thereof, wherein the polyhydroxyalkanoate more preferably is poly(hydroxybutyrate) (PHB).

Preferably, the synthetic biodegradable polymer is selected from the group consisting of poly(ε-caprolactone) (PCL), poly(glycolide) (PGA), poly(3-hydroxybutyrate-co-3-hydroxyvalerate) (PHBV), poly(ethylene-vinyl acetate) (PEVA), poly(butylene adipate-co-terephthalate) (PBAT) and a mixture of two or more thereof, more preferably selected from the group consisting of poly(ε-caprolactone) (PCL), poly(glycolide) (PGA), poly(3-hydroxybutyrate-co-3-hydroxyvalerate) (PHBV), poly(butylene adipate-co-terephthalate) (PBAT) and a mixture of two or more thereof.

Preferably, the at least one biodegradable polymer is selected from the group consisting of polylactide (PLA), polyhydroxyalkanoate (PHA), such as PHB, polybutylene succinate (PBS), starch, starch-based polymer, cellulose, cellulose-based polymer, chitin, chitin-based polymer, chitosan, chitosan-based polymer, lignin, lignin-based polymer, soy-based polymer, succinic acid based-polyester polyols, poly(ε-caprolactone) (PCL), poly(glycolide) (PGA), poly(3-hydroxybutyrate-co-3-hydroxyvalerate) (PHBV), poly(ethylenevinyl acetate) (PEVA), poly(butylene adipate-co-terephthalate) (PBAT) and a mixture of two or more thereof, more preferably selected from the group consisting of polylactide (PLA), polyhydroxyalkanoate (PHA), polybutylene succinate (PBS), starch, cellulose, chitin, chitosan, lignin, soy polymer, poly(ε-caprolactone) (PCL), poly(glycolide) (PGA), poly(3-hydroxybutyrate-co-3-hydroxyvalerate) (PHBV), poly(ethylene-vinyl acetate) (PEVA), poly(butylene adipate-co-terephthalate) (PBAT) and a mixture of two or more thereof.

Preferably the at least one biodegradable polymer is a mixture of at least two biodegradable polymers as listed in the foregoing.

Preferably, the melting point of the at least one biodegradable polymer is of at least 200°C, preferably at least 250°C, more preferably in the range of from 250 to 450°C, the melting point being determined according to ASTM D3418-03.

Preferably, the melting point of the stud body is of at least 200°C, preferably at least 250°C, more preferably in the range of from 250 to 450°C, the melting point being determined according to ASTM D3418-03.

Preferably, the stud body further comprises one or more fibers. Preferably, the one or more fibers are natural fibers. Preferably, the one or more natural fibers are one or more of flax fibers, jute fibers, hemp fibers, sisal fibers, wood fibers, pineapple leaf fibers, and oil palm fibers, wherein the wood fibers are preferably bamboo fibers, such as American bamboo fibers. In the context of the present invention, fibers are used for reinforcing the biodegradable polymer.

Preferably, the stud body comprises the one or more fibers in an amount in the range of from 1 to 30 weight percent, more preferably in the range of from 5 to 28 weight percent, more preferably in the range of from 15 to 25 weight percent, based on the weight of the stud body.

Preferably, the one or more fibers have an average length in the range of from 0.5 to 100 micrometers, more preferably in the range of from 1 to 50 micrometers.

Preferably, the stud body further comprises nanoparticles.

Preferably, the nanoparticles comprised in the stud body are biodegradable. More preferably, the nanoparticles are selected from the group consisting of starch-based nanoparticles, lignin-based nanoparticles, cellulose-based nanoparticles, chitin-based nanoparticles, chitosan-based nanoparticles, soy-based nanoparticles and a mixture of two or more thereof, more preferably selected from the group consisting of starch-based nanoparticles, lignin-based nanoparticles and a mixture thereof.

It is also conceivable that the nanoparticles comprises silica being produced from rice husk ash (RHA), an agricultural waste product.

Preferably, the stud body comprises the nanoparticles in an amount in the range of from 1 to 50 weight percent, more preferably in the range of from 5 to 45 weight percent, based on the weight of the stud body. In the context of the present invention, it is believed that such nanoparticles may play a role in the properties of the tire body, such as stiffness.

Preferably, the stud body further comprises algae.

Preferably, the stud body comprises the algae in an amount in the range of from 0.01 to 20 weight percent, more preferably in the range of from 0.1 to 15 weight percent, based on the weight of the stud body. In the context of the present invention, algae can be used as an additive for reinforcing the one or more biodegradable polymers. They could also be used as pigment for the stud body.

The stud body may further comprises one or more non-biodegradable polymers, wherein the non-biodegradable polymers are selected from the group consisting of polyamides, such as nylon, polyimides, fluoroelastomers, epoxy resins and a mixture of two or more thereof. In such case, the stud body preferably comprises at most 20 weight percent, more preferably at most 10 weight percent, more preferably at most 5 weight percent, more preferably at most 2 weight percent, of said one or more non-biodegradable polymers based on the weight of the stud body.

Alternatively, preferably, the stud body is a biodegradable stud body. Preferably, the stud body is substantially free of, more preferably free of, any non-biodegradable component.

Preferably from 90 to 100 weight percent, more preferably from 95 to 100 weight percent, more preferably from 98 to 100 weight percent, more preferably from 99 to 100 weight percent, more preferably from 99.9 to 100 weight percent, more preferably from 99.99 to 100 weight percent, of the stud body consists of the at least one biodegradable polymer, optionally one or more fibers as defined in the foregoing, optionally nanoparticles as defined in the foregoing and optionally algae as defined in the foregoing. Preferably the stud body consists essentially of, more preferably consists of, the at least one biodegradable polymer, optionally one or more fibers as defined in the foregoing, optionally nanoparticles as defined in the foregoing and optionally algae as defined in the foregoing.

Preferably, the pin of the tire stud is made of metal and/or ceramic material, preferably of metal, wherein the metal is one or more of tungsten carbide and steel, more preferably tungsten carbide.

Preferably, the stud body, as such, has a half-life of at most fifteen (15) years, more preferably at most ten (10) years, more preferably of at most five (5) years, in nature.

Preferably, the stud body, as such, is a compostable stud body according to the standard NF EN 13432 or NF EN 14995, more preferably the stud body, as such, is a biodegradable and compostable stud body.

In the context of the present invention, the expression "stud body, as such" means that the stud body, and even the tire stud, is not fixed/embedded in the tires. For example, this situation might occur when a tire stud has been ejected from a tire (tire tread) on a road.

The present invention further relates to a pneumatic tire comprising at least one tire stud according to the present invention. Preferably, the pneumatic tire comprises a plurality of tire studs according to the present invention. In the context of the present invention, a plurality of tire studs means at least two tire studs according to the present invention, more preferably at least ten tire studs according to the present invention.

Preferably, the pneumatic tire further comprises a tread, wherein the tread comprises the at least one tire stud, more preferably a plurality of tire studs, which are embedded therein. As know by the skilled person, the tire studs are embedded in the tread such that the pin of the tire stud is the portion of the tire stud which will/can be in contact with the ground.

Preferably, the pneumatic tire further comprises a polymeric layer coated onto the stud body of the at least one tire stud and being in contact with the tread. In the context of the present invention, this polymeric layer improves the adhesion of the tire stud with the tread.

Preferably, the polymeric layer of the pneumatic tire is biodegradable. Preferably, the polymeric layer comprises the biodegradable polymers listed in the foregoing for the stud body. Preferably, the biodegradable polymers of the polymeric layer are selected from the group consisting of polylactide (PLA), polyhydroxyalkanoate (PHA), such as PHB, polybutylene succinate (PBS), starch, starch-based polymer, cellulose, cellulose-based polymer, chitin, chitin-based polymer, chitosan, chitosan-based polymer, lignin, lignin-based polymer, soy-based polymer, succinic acid based-polyester polyols, poly(ε-caprolactone) (PCL), poly(glycolide) (PGA), poly(3-hydroxybutyrate-co-3-hydroxyvalerate) (PHBV), poly(ethylene-vinyl acetate) (PEVA), poly(butylene adipate-co-terephthalate) (PBAT) and a mixture of two or more thereof. Indeed, it is important that this material, if present, in the tire be biodegradable since, as the stud body, it can be ejected from the pneumatic tire.

Preferably, the pneumatic tire is a winter, snow and/or ice pneumatic tire.

The present invention is further illustrated by the following set of embodiments and combinations of embodiments resulting from the dependencies and back-references as indicated. In particular, it is noted that in each instance where a range of embodiments is mentioned, for example in the context of a term such as "The tire stud of any one of embodiments 1 to 4", every embodiment in this range is meant to be explicitly disclosed for the skilled person, i.e., the wording of this term is to be understood by the skilled person as being synonymous to "The tire stud of any one of embodiments 1, 2, 3, and 4". Further, it is explicitly noted that the following set of embodiments represents a suitably structured part of the general description directed to preferred aspects of the present invention, and, thus, suitably supports, but does not represent the claims of the present invention.

According to embodiment 1 of the present invention, the tire stud comprises: a stud body comprising at least one biodegradable polymer, wherein the at least one biodegradable polymer is one or more of a bio-based biodegradable polymer and a synthetic biodegradable polymer, and a pin.

Embodiment 2: The tire stud of embodiment 1, wherein the bio-based biodegradable polymer is selected from the group consisting of polylactide (PLA), polyhydroxyalkanoate (PHA), polybutylene succinate (PBS), starch-based polymer, cellulose-based polymer, chitin-based polymer, chitosan-based polymer, lignin-based polymer, soy-based polymer, succinic acid based-polyester polyols, and a mixture of two or more thereof.

Embodiment 3: The tire stud of embodiment 1 or 2, wherein the bio-based biodegradable polymer is a bio-based biodegradable polyester, wherein the biodegradable polyester is selected from the group consisting of polylactide (PLA), polyhydroxyalkanoate (PHA), polybutylene succinate (PBS), starch, cellulose, chitin, chitosan, lignin, succinic acid based-polyester polyols, and a mixture of two or more thereof, wherein the polyhydroxyalkanoate preferably is poly(hydroxybutyrate) (PHB).

Embodiment 4: The tire stud of any one of embodiments 1 to 3, wherein the synthetic biodegradable polymer is selected from the group consisting of poly(ε-caprolactone) (PCL), poly(glycolide) (PGA), poly(3-hydroxybutyrate-co-3-hydroxyvalerate) (PHBV), poly(ethylenevinyl acetate) (PEVA), poly(butylene adipate-co-terephthalate) (PBAT) and a mixture of two or more thereof, preferably selected from the group consisting of poly(ε-caprolactone) (PCL), poly(glycolide) (PGA), poly(3-hydroxybutyrate-co-3-hydroxyvalerate) (PHBV), poly(butylene adipate-co-terephthalate) (PBAT) and a mixture of two or more thereof.

Embodiment 5: The tire stud of any one of embodiments 1 to 4, wherein the melting point of the at least one biodegradable polymer is of at least 200°C, preferably of at least 250°C, more preferably in the range of from 250 to 450°C, the melting point being determined according to ASTM D3418-03.

Embodiment 6: The tire stud of any one of embodiments 1 to 5, wherein the stud body further comprises one or more fibers.

Embodiment 7: The tire stud of any one of embodiment 6, wherein the one or more fibers are natural fibers.

Embodiment 8: The tire stud of embodiment 7, wherein the one or more natural fibers are one or more of flax fibers, jute fibers, wood fibers, pineapple leaf fibers, and oil palm fibers, the wood fibers being preferably bamboo fibers.

Embodiment 9: The tire stud of any one of embodiments 1 to 8, wherein the stud body further comprises preferably biodegradable nanoparticles, preferably in an amount in the range of from 1 to 50 weight percent, more preferably in the range of from 5 to 45 weight percent, based on the weight of the stud body.

Embodiment 10: The tire stud of embodiment 9, wherein the nanoparticles of the stud body are biodegradable, wherein preferably the nanoparticles are selected from the group consisting of starch-based nanoparticles, lignin-based nanoparticles, cellulose-based nanoparticles, chitin-based nanoparticles, chitosan-based nanoparticles, soy-based nanoparticles and a mixture of two or more thereof, more preferably selected from the group consisting of starch-based nanoparticles, lignin-based nanoparticles and a mixture thereof.

Embodiment 11: The tire stud of any one of embodiments 1 to 10, wherein the stud body further comprises algae.

Embodiment 12: The tire stud of embodiment 11, wherein the stud body comprises the algae in an amount in the range of from 0.01 to 20 weight percent, more preferably in the range of from 0.1 to 15 weight percent, based on the weight of the stud body.

Embodiment 13: The tire stud of any one of embodiments 1 to 12, wherein the stud body is a biodegradable stud body.

Embodiment 14: The tire stud of any one of embodiments 1 to 13, wherein the pin is made of metal and/or ceramic material, preferably of metal, wherein the metal is one or more of tungsten carbide and steel, more preferably tungsten carbide.

Embodiment 15: The tire stud of any one of embodiments 1 to 14, wherein the stud body, as such, has a half-life of at most fifteen (15) years, preferably at most ten (10) years, more preferably of at most five (5) years, in nature.

Embodiment 16: A pneumatic tire comprising at least one tire stud according to any one of embodiments 1 to 15.

Embodiment 17: The pneumatic tire of embodiment 16, further comprising a tread, wherein the tread comprises the at least one tire stud, more preferably a plurality of tire studs according to any one of embodiments 1 to 15, which are embedded therein.

Embodiment 18: The pneumatic tire of embodiment 16 or 17, further comprising a polymeric layer coated onto the stud body of the at least one tire stud and being in contact with the tread.

Embodiment 19: The pneumatic tire of any one of embodiments 16 to 18, being a winter, snow and/or ice pneumatic tire.

FIG.1 is a schematic drawing of a tire stud 1 which comprises a pin 2 and a stud body 3. The shape of the tire stud according to the present invention, including the shape of the pin and the tire stud body, is not restricted at all to the one presented in FIG. 1. This figure is only an illustration of a possible shape of the tire stud according to the present invention. Indeed, the present invention rather focuses on the stud body and the biodegradability of its components as detailed in the foregoing.

## Claims

1. A tire stud comprising a stud body (3) and a pin (2), **characterized in that** the stud body (3) comprises at least one biodegradable polymer, wherein the at least one biodegradable polymer is one or more of a bio-based biodegradable polymer and a synthetic biodegradable polymer.

2. The tire stud of claim 1, wherein the bio-based biodegradable polymer is selected from the group consisting of polylactide (PLA), polyhydroxyalkanoate (PHA), polybutylene succinate (PBS), starch-based polymer, cellulose-based polymer, chitin-based polymer, chitosan-based polymer, lignin-based polymer, soy-based polymer, succinic acid based-polyester polyols and a mixture of two or more thereof.

3. The tire stud of claim 1 or 2, wherein the bio-based biodegradable polymer is a bio-based biodegradable polyester, wherein the biodegradable polyester is selected from the group consisting of polylactide (PLA), polyhydroxyalkanoate (PHA), polybutylene succinate (PBS), starch, cellulose, chitin, chitosan, lignin, succinic acid based-polyester polyols and a mixture of two or more thereof.

4. The tire stud of at least one of the previous claims, wherein the synthetic biodegradable polymer is selected from the group consisting of poly(ε-caprolactone) (PCL), poly(glycolide) (PGA), poly(3-hydroxybutyrate-co-3-hydroxyvalerate) (PHBV), poly(ethylene-vinyl acetate) (PEVA), poly(butylene adipate-co-terephthalate) (PBAT) and a mixture of two or more thereof.

5. The tire stud of at least one of the previous claims, wherein the melting point of the at least one biodegradable polymer is of at least 200°C, the melting point being determined according to ASTM D3418-03.

6. The tire stud of at least one of the previous claims, wherein the stud body (3) further comprises one or more fibers, said one or more fibers preferably being natural fibers or preferably being one or more of flax fibers, jute fibers, wood fibers, pineapple leaf fibers, and oil palm fibers.

7. The tire stud of at least one of the previous claims, wherein the stud body (3) further comprises nanoparticles, the nanoparticles of the stud body (3) preferably being biodegradable or preferably being selected from the group consisting of starch-based nanoparticles, lignin-based nanoparticles, cellulose-based nanoparticles, chitin-based nanoparticles, chitosan-based nanoparticles, soy-based nanoparticles and a mixture of two or more thereof.

8. The tire stud of at least one of the previous claims, wherein the stud body (3) further comprises algae, preferably in an amount in the range of from 0.01 to 20 weight percent based on the weight of the stud body (3).

9. The tire stud of at least one of the previous claims, wherein the stud body (3) is a biodegradable stud body (3).

10. The tire stud of at least one of the previous claims, wherein the pin (2) is made of metal and/or ceramic material, preferably tungsten carbide and/or steel

11. The tire stud at least one of the previous claims, wherein the stud body (3), as such, has a half-life of at most fifteen years in nature.

12. A tire comprising at least one tire stud (1) in accordance with at least one of the previous claims.

13. The tire of claim 12, wherein the tire is a pneumatic tire and further comprises a tread, wherein the tread comprises the at least one tire stud (1) which is embedded or inserted therein.

14. The pneumatic tire of claim 13, further comprising a polymeric layer coated onto the stud body (3) of the at least one tire stud (1) and being in contact with the tread.

15. The pneumatic tire of at least one of the previous claims 12 to 14 wherein the tire is a winter, snow and/or ice pneumatic tire, or wherein the tire is a non-pneumatic tire.

## Patentansprüche

1. Spike für einen Reifen, der einen Spikekörper (3) und einen Stift (2) umfasst, **dadurch gekennzeichnet, dass** der Spikekörper (3) zumindest ein biologisch abbaubares Polymer umfasst; wobei das zumindest eine biologisch abbaubare Polymer ein oder mehrere Polymere darstellt, die aus einem biologisch abbaubaren Polymer auf biologischer Basis und einem biologisch abbaubaren Polymer vom synthetischen Typ ausgewählt sind.

2. Spike für einen Reifen nach Anspruch 1, wobei das oben genannte biologisch abbaubare Polymer auf biologischer Basis aus der Gruppe ausgewählt ist, die aus Polylactid (PLA), Polyhydroxyalkanoat (PHA), Polybutylensuccinat (PBS), einem Polymer auf Basis von Stärke, einem Polymer auf Basis von Cellulose, einem Polymer auf Basis von Chitin, einem Polymer auf Basis von Chitosan, einem Polymer auf Basis von Lignin, einem Polymer auf Basis von Soja, Polyesterpolyolen auf Basis von Bernsteinsäure und einer Mischung aus zwei oder mehr davon besteht.

3. Spike für einen Reifen nach Anspruch 1 oder 2, wobei das oben genannte biologisch abbaubare Polymer auf biologischer Basis ein biologisch abbaubarer Polyester ist, wobei der biologisch abbaubare Polyester auf biologischer Basis aus der Gruppe ausgewählt ist, die aus Polylactid (PLA), Polyhydroxyalkanoat (PHA), Polybutylensuccinat (PBS), Polyesterpolyolen auf Basis von Stärke, auf Basis von Cellulose, auf Basis von Chitin, auf Basis von Chitosan, auf Basis von Lignin, auf Basis von Bernsteinsäure und einer Mischung aus zwei oder mehr davon besteht.

4. Spike für einen Reifen nach mindestens einem der vorhergehenden Ansprüche, wobei das synthetische biologisch abbaubare Polymer aus der Gruppe ausgewählt ist, die aus einem Polymer aus Poly-ε-caprolacton (PCL), einem Polyglycolid (PGA), einem Copolymer aus 3-Hydroxybutyrat-3-Hydroxyvalerat (PHBV), einem Polymer aus Ethylen und Vinylacetat (PEVA), einem Copolymer aus Polybutylenadipat-Terephthalat (PBAT) und einer Mischung aus zwei oder mehr davon besteht.

5. Spike für einen Reifen nach mindestens einem der vorhergehenden Ansprüche, wobei der Schmelzpunkt des zumindest einen biologisch abbaubaren Polymers mindestens 200 °C beträgt; wobei der Schmelzpunkt gemäß der Norm ASTM D3418-03 bestimmt wird.

6. Spike für einen Reifen nach mindestens einem der vorhergehenden Ansprüche, wobei der Spikekörper (3) ferner eine oder mehrere Fasern umfasst; wobei die oben genannten eine oder mehrere Fasern, vorzugsweise Naturfasern oder vorzugsweise eine oder mehrere Fasern darstellen, die aus Flachsfasern, Jutefasern, Holzfasern, Ananasblattfasern und Palmfasern ausgewählt sind.

7. Spike für einen Reifen nach mindestens einem der vorhergehenden Ansprüche, wobei der Spikekörper (3) ferner Nanopartikel umfasst; wobei die Nanopartikel des Spikekörpers (3) vorzugsweise biologisch abbaubar sind oder vorzugsweise aus der Gruppe ausgewählt sind, die aus Nanopartikeln auf Basis von Stärke, Nanopartikeln auf Basis von Lignin, Nanopartikeln auf Basis von Cellulose, Nanopartikeln auf Basis von Chitin, Nanopartikeln auf Basis von Chitosan, Nanopartikeln auf Basis von Soja und einer Mischung aus zwei oder mehr davon bestehen.

8. Spike für einen Reifen nach mindestens einem der vorhergehenden Ansprüche, wobei der Spikekörper (3) ferner Algen umfasst, vorzugsweise in einer Menge, die in dem Bereich von 0,01 bis 20 Gewichtsprozent auf Basis des Gewichts des Spikekörpers (3) liegt.

9. Spike für einen Reifen nach mindestens einem der vorhergehenden Ansprüche, wobei der Spikekörper (3) ein biologisch abbaubarer Spikekörper (3) ist.

10. Spike für einen Reifen nach mindestens einem der vorhergehenden Ansprüche, wobei der Stift (2) aus Metall und/oder Keramik, vorzugsweise aus Wolframkarbid und/oder Stahl, ausgeführt ist.

11. Spike für einen Reifen nach mindestens einem der vorhergehenden Ansprüche, wobei der Spikekörper (3) als solcher eine Halbwertszeit von im Wesentlichen maximal fünfzehn Jahren aufweist.

12. Reifen, der zumindest einen Spike für einen Reifen (1) nach mindestens einem der vorstehenden Ansprüche umfasst.

13. Reifen nach Anspruch 12, wobei der Reifen ein Luftreifen ist und ferner eine Lauffläche umfasst, wobei die Lauffläche den zumindest einen Spike (1) umfasst, der in der oben genannten Lauffläche eingebettet oder eingesetzt ist.

14. Luftreifen nach Anspruch 13, wobei der Luftreifen ferner eine Polymerschicht umfasst, die den Spikekörper (3) des zumindest einen Spikes für einen Reifen (1) bedeckt und die mit der Lauffläche in Kontakt gebracht wird.

15. Luftreifen nach mindestens einem der vorhergehenden Ansprüche 12 bis 14, wobei der Reifen ein Luftreifen für den Winter, für Schnee und/oder Eis ist; oder wobei der Reifen ein Nicht-Luftreifen ist.

## Revendications

1. Crampon pour un bandage qui comprend un corps de crampon (3) et une goupille (2), **caractérisé en ce que** le corps de crampon (3) comprend au moins un polymère biodégradable ; dans lequel ledit polymère biodégradable représente un ou plusieurs polymères qui sont choisis parmi un polymère biodagrédable à base biologique et polymère biodagrédable de type synthétique.

2. Crampon pour un bandage selon la revendication 1, dans lequel le polymère biodagrédable à base biologique est choisi parmi le groupe constitué par un polylactide (PLA), un polyhydroxyalcanoate (PHA), un polybutylène succinate (PBS), un polymère à base d'amidon, un polymère à base de cellulose, un polymère à base de chitine, un polymère à base de chitosane, un polymère à base de lignine, un polymère à base de soja, des polyesterpolyols à base d'acide succinique et un mélange de deux d'entre eux ou plus.

3. Crampon pour un bandage selon la revendication 1 ou 2, dans lequel le polymère biodagrédable à base biologique est un polyester biodagrédable à base biologique ; dans lequel le polyester biodagrédable est choisi parmi le groupe constitué par un polylactide (PLA), un polyhydroxyalcanoate (PHA), un polybutylène succinate (PBS), des polyesterpolyols à base d'amidon, à base de cellulose, à base de chitine, à base de chitosane, à base de lignine, à base d'acide succinique et un mélange de deux d'entre eux ou plus.

4. Crampon pour un bandage selon au moins une des revendications précédentes, dans lequel le polymère biodagrédable de type synthétique est choisi parmi le groupe qui est constitué par un polymère de polyca-ε-prolactone (PCL), du polyglycolide (PGA), un copolymère de 3-hydroxybutyrate-3-hydroxyvalérate (PHBV), un polymère d'éthylène-acétate de vinyle (PEVA), un copolymère de polybutylène adipate téréphtalate (PBAT) et un mélange de deux d'entre eux ou plus.

5. Crampon pour un bandage selon au moins une des revendications précédentes, dans lequel le point de fusion dudit au moins un polymère biodégradable s'élève à au moins 200°C ; dans lequel le point de fusion est déterminé en conformité avec la norme ASTM D3418-03.

6. Crampon pour un bandage selon au moins une des revendications précédentes, dans lequel le corps de crampon (3) comprend en outre une ou plusieurs fibres ; dans lequel lesdites une ou plusieurs fibres représentent de préférence des fibres naturelles ou représentent de préférence une ou plusieurs fibres qui sont choisies parmi des fibres de lin, des fibres de jute, des fibres de bois, des fibres de feuilles d'ananas et des fibres de palme.

7. Crampon pour un bandage selon au moins une des revendications précédentes, dans lequel le corps de crampon (3) comprend en outre des nanoparticules ; dans lequel les nanoparticules du corps de crampon (3) sont de préférence biodégradables ou sont de préférence choisies parmi le groupe qui est constitué par des nanoparticules à base d'amidon, des nanoparticules à bas de lignine, des nanoparticules à base de cellulose, des nanoparticules à base de chitine, des nanoparticules à base de chitosane, des nanoparticules à base de soja et un mélange de deux d'entre elles ou plus.

8. Crampon pour un bandage selon au moins une des revendications précédentes, dans lequel le corps de crampon (3) comprend en outre des algues, de préférence en une quantité qui se situe dans la plage allant de 0,01 à 20 pour cent en poides, basés sur le poides du corps de crampon (3).

9. Crampon pour un bandage selon au moins une des revendications précédentes, dans lequel le corps de crampon (3) est un corps de crampon (3) biodégradable.

10. Crampon pour un bandage selon au moins une des revendications précédentes, dans lequel la goupille (2) est réalisée à partir de métal et/ou d'une matière céramique, de préférence à partir de carbure de tungstène et/ou d'acier.

11. Crampon pour un bandage selon au moins une des revendications précédentes, dans lequel le corps de crampon (3), en tant que tel, possède une demi-vie de quinze ans maximum par essence.

12. Bandage qui comprend au moins un crampon (1) pour un bandage selon au moins une des revendications précédentes.

13. Bandage selon la revendication 12 ; dans lequel le bandage est un bandage pneumatique et comprend en outre une bande de roulement ; dans lequel la bande de roulement comprend ledit au moins un crampon pour un bandage (1) à l'état encastré ou inséré.

14. Bandage pneumatique selon la revendication 13, qui comprend en outre une couche polymère qui recouvre le corps de crampon (3) dudit au moins un crampon pour un bandage (1) et qui est mise en contatc avec la bande de roulement.

15. Bandage pneumatique selon au moins une des revendications précédentes 12 à 14, dans lequel le bandage est un bandage pneumatique pour l'hiver, pour la neige et/ou pour la glace ; ou dans lequel le bandage est un bandage non pneumatique.
